# EUROPEAN PATENT SPECIFICATION

(11) **EP 0 486 706 B1**
(45) Date of publication and mention of the grant of the patent: **02.09.1998**
(21) Application number: 91911194.8
(22) Date of filing: 13.06.1991
(51) Int. Cl.: C04B 37/00

(54) **ELECTRICAL CEMENTING AGENT FOR CERAMIC**
ELEKTRISCH LEITENDER KLEBSTOFF FÜR KERAMIK
COLLE ELECTROCONDUCTRICE POUR CERAMIQUE

(30) Priority: 13.06.1990 JP 154266/90; 13.06.1990 JP 154267/90; 19.07.1990 JP 191912/90; 10.08.1990 JP 213068/90; 25.12.1990 JP 405758/90
(43) Date of publication of application: 27.05.1992
(73) Proprietor: DAIHEN CORPORATION, Osaka-shi, Osaka 532 (JP); YANAGIDA, Hiroaki, Chofu-shi, Tokyo 182 (JP)
(72) Inventor: YANAGIDA, Hiroaki, Chofu-shi, Tokyo 182 (JP); MATSUI, Akio, Ikeda-shi, Osaka 563 (JP); NISHI, Tokumitsu, Osaka-shi, Osaka 537 (JP); OKUDA, Kouji, Kobe-shi, Hyogo 654-01 (JP); TAKAI, Hiroshi, Nishinomiya-shi, Hyogo 663 (JP); HOSHINO, Hisakiyo, Settsu-shi, Osaka 566 (JP); NUMANO, Masashi, Takatsuki-shi, Osaka 569 (JP); MIYAKE, Natsumi, Toyonaka-shi, Osaka 560 (JP)
(74) Representative: Gura, Henry Alan
(86) International application number: PCT/JP91/00796
(87) International publication number: WO 91/19689

(56) References cited:
- EP-A- 0 218 943
- EP-A- 0 500 937
- JP-A- 6 265 986
- JP-A-59 156 975
- JP-A-60 151 284
- JP-A-62 148 380
- JP-B- 6 154 748
- US-A- 4 486 257
- PATENT ABSTRACTS OF JAPAN vol. 144, no. 23 (C-757)12 September 1990
- CHEMICAL ABSTRACTS, vol. 112, no. 22, 28 May 1990, Columbus, Ohio, US; abstract no. 203636r, K. OKUDA 'Electric welding of ceramics and heating elements for the welding' page 319 ;

## Description

Previously, there have been disclosed various kinds of joining agents, such as inorganic solder comprising various oxides, fluorides and various metal solders comprising various metals for joining ceramic bodies to each other. For example, a joining agent composed of a powder mixture of CaF₂ and kaolinite is applied to parts to be joined of silicon nitride ceramic plates and then heated at 1400 to 1500°C in a furnace to obtain jointed ceramics by a reaction of the joining agent and the silicon nitride ceramic (Japanese patent application, JP-A-59-158542. The CaF₂ is used because it decomposes thermally at a high temperature and produces F₂ gas which corrodes or eats away the surface of the ceramic. As a result, the reaction product between calcium and kaolinite promotes the reaction of the joining agent with the ceramics. When the joining agent is selected to have a good wettability and a high reactivity with the ceramic, the joint part between the ceramic bodies is completed upon heating the joining agent at a temerature higher than its melting point. A conventional heating method is to heat the whole of the ceramic body with the joining agent in the furnace at a joining temperature to achieve the joining. When the ceramic body of a large size or a long size is jointed, it is necessary to use a large furnace or to take a long time for heating up or cooling down. This results in problems such as the limitation of the equipment and an increase in the equipment cost or running cost. Further, the higher joining temperature may cause the thermal degradation of the ceramic body. Therefore, the problem occurs with the application field requiring the thermal resistance. Since the heating method to heat the whole of the ceramic body with the joining agent has various problems as mentioned above, it is desirable to achieve a joining method to heat partially only the part to be jointed. In order to solve these problems, US Patent No. 4,724,020 has reported an electric joining method for ceramic bodies.

The electric joining method is carried out in the following way: The planes to be jointed of ceramic bodies are applied with a joining agent having an electric conductivity at a high temperature and are pre-heated by a gas flame to a temperature more than about 800 °C in advance. A high voltage is applied across a pair of electrodes to supply electric current to the joining agent. Then the joining agent is heated by the Joule heat and is melted to complete the ceramic joining through the reaction between the joining agent and the ceramics.

The electric joining method mentioned above has an advantage to decrease the joining cost including the equipment cost and running cost even with the large size or the long size ceramic bodies and to suppress the thermal degradation of the ceramic material. However, the electric joining method has the following disadvantage: The conventional joining agent used in a furnace is required only to have wettability and reactivity with the ceramics. On the other hand, the joining agent used in the electric joining method must have an electric conductivity at a high temperature in addition to the above properties because the joining is completed by supplying electric current to the joining agent. Accordingly, a joining agent of the conventional type used in a high temperature furnace is not always applicable for the electric joining method. It is necessary to develop a joining agent suitable for the electric joining method.

US Patent No. 4724020 discloses a joining agent applicable to the electric joining method, which has such an electrical conductivity that permits an electric current of several 10 mA to flow under the voltage of 1,000 to 10,000 V at a temperature higher than 800°C. As a practical matter, there is disclosed such a joining agent including, as a main constituent, glass comprising kaolinite, Al₂O₃, and SiO₂ and, as an additive, oxide, sulfide or chloride of copper, nickel, manganese, indium, molybdenum, or zinc, or oxide of rare earth material such as lanthanum, indium, vanadium, holmium and yttrium, or metal such as molybdenum, manganese, tungsten, iron, copper, silver, nickel, tin and zinc, or fluoride such as calcium fluoride and sodium fluoride. The joining agent having no electrical conductivity is added with a material having an electrical conductivity such as carbon, fluoride, glass, metal oxide and rare earth materials.

However, it is found through the practical use by the inventors that a joining agent having only the electrical conductivity and the reactivity with the ceramics does not always result in formation of a good joint. For example, a joining agent can have a metal powder as an electrical conductor added into glass to permit electric current to flow therethrough. However, the electric current localizes predominantly at the metal powder portion. As a result, the part to be jointed is not heated uniformly and is not formed into a good joint. Especially, there is a big problem with long ceramic bodies. Therefore, it is found that the joining agent provided only with electric conductivity is not sufficient for executing the electric joining method.

As a result of the inventive investigation, the present inventors have noted that it is necessary to develop a joining agent to permit the electric current path to move smoothly with the movement of the electrode when the ceramic part is jointed by an electric joining method. It has been known in the present technical field that the joining agent has generally an electrical conductivity in a positive characteristic which makes it difficult to move the electric current path with the movement of the electrode. Against the above information, the present inventors have found that there may be a joining agent to permit the electric current path to move with the movement of the electrode after investigation of the heating mechanism with various joining agents.

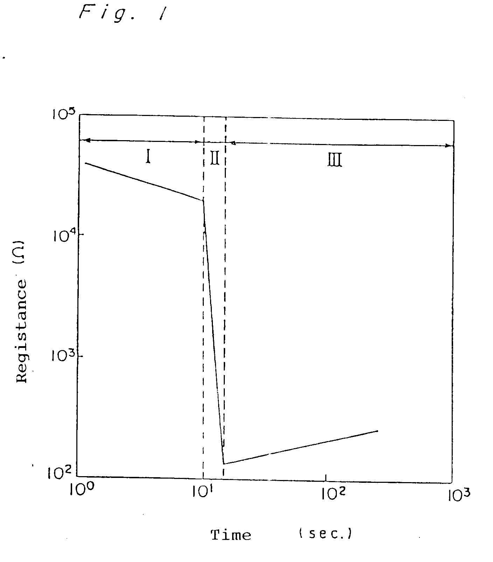

Fig. 1 shows the time variation in the electric resistance of the joining agent. An increase in the voltage of the electric source causes initially a slight electric current (referred to as "initial driving current" hereinafter) to flow through the joining agent in the first range I. At the next step, the electric current increases rapidly at a given value of the voltage and subsequently the load voltage decreases rapidly in the second range II. After that, at a range where the electric current is a constant value, the load voltage gradually increases, that is, at this range, the joining agent changes in the composition and is in a higher electric resistance (this range is referred to as the third range III hereinafter). Therefore, followed with the movement of the electrode or even without any movement of the electrode, the electric current path moves sequentially to an area of lower electric resistance from an area of higher electric resistance. That is, without any external force, the electric current path tends to be made automatically at an area for flowing of electric current and thus move voluntarily to any lower electric resistance areas from higher ones. Finally, thereby the reaction between the joining agent and a pair of ceramic bodies proceeds sufficiently to join the ceramic bodies in accordance with the change in the composition into a higher electric resistance.

Accordingly, an object of the present invention is to provide a joining agent which may change in composition to a high electric resistance so that the load voltage increases gradually at the range in which a change in the electric current comes to a constant value as shown in Fig.1.

The present invention has been achieved on the basis of our findings that the reason why the joining agent shows the time change in the electric resistance as shown in Fig. 1 is the fact that an electroconductive component comprising the ion conductor has the property that a formed ion carrier density or mobility is decreased by means of an ion carrier diffusion process into the mother material, and by means of reactions of the ion carrier with the mother material or other joining agent, the oxygen in the atmosphere and the water resulting from the decomposition of flame.

According to the present invention, there is provided a method of joining ceramic bodies by an electric joining method comprising:
applying to the ceramic bodies a joining composition of:
   (a) an electric conductive component effective for providing an electric conductivity to said composition at an electric current supplying time; and (b) a joining component for providing an effective wettability to the ceramic bodies in the molten state of the joining agent and an effective joining strength in the solidified state;
pre-heating the composition;
causing an electric current to flow in the composition to melt the composition; and
cooling the composition to form a joint between the ceramic bodies;
   characterised in that said electric conductive component is an ion conductor which comprises YF₃, or ScF₃, and, optionally, a chloride or an oxide and is selected so as to form carrier ions during pre-heating which provides said joining agent with an electric conductivity higher than that of the ceramic bodies at the electric current supplying time, said electric conductive component and said joining component being selected in effective amounts such that the electric resistance of said joining agent increases gradually at said molten state by decreasing the density or the mobility of said carrier ions.

Embodiments of this method are set out in claims 1 and 2. The invention also provides compositions for use in joining ceramic bodies according to this method - embodiments are set out in claims 3 and 4.

The ion conductor may include chloride, and/or an oxide, in addition to YF₃ or ScF₃. Since chlorides have a deliquescence property, YF₃ and ScF₃ tend to be superior in handling. An oxide ion conductor may be selected from the group consisting of alkali metal oxides such as Li₂O, Na₂O or K₂O and alkaline earth metal oxides such as MgO, or CaO, which can produce cations having a rather high mobility.

Among the above oxide materials, the alkaline earth metal oxide, such as CaO or MgO, is inexpensive and does not produce a poisonous gas such as fluorine gas in the case of fluoride and further has a useful electric conductivity even though it is inferior to that of fluoride. Therefore, it is preferable or allowable to use as the ion conductor a mixture of more than two kinds of the above conductive materials so as to have the suitable electroconductive property in accordance with the application field instead of using one kind of the above conductive material.

The lower limit of the mixing ratio of the conductive component with the joining component is determined on the basis of an amount to permit the electric current to flow at a level necessary for producing sufficient Joule heat during the application of electric field, while the upper limit of the mixing ratio is determined on the basis of an amount not to decrease the strength of the joining agent. In addition, another important factor to be determined for the mixing ratio is the variation of the electric resistance with the kind and the mixing ratio of the conductive material, and the kind and the heating degree of the ceramics to be jointed. If the resistance variation ratio of the joining agent is too small, the movement characteristic of electric current path becomes worse. Hence, it is sometimes difficult to obtain an excellent joined part at the whole of the planes to be jointed. On the other hand, if the variation ratio is too large, it may be difficult to permit the electric current to flow due to the resulting high electric resistance of the joining agent before the sufficient reaction between the joining agent and the ceramic bodies to be jointed Accordingly, in order to carry out reproducible joining, it is necessary to select a joining composition having a suitable resistance variation ratio within the above basic range.

The second aspect of the present invention provides a composition for use in the above described electric joining method executed, for example, with ceramics such as oxides or silicon nitride, which composition may be superior in the reproducible and stable formation of joints and is provided with a practically usable joining strength at a high temperature.

A joining composition in accordance with the present invention includes, as a fluoride additive, the rare earth element fluoride ScF₃ or YF₃. This can achieve higher strengths at a high temperature. The composition preferably contains the rare earth element fluoride at a concentration of more than 15 weight % and the residual of at least one element selected from the group consisting of A1₂O₃ and SiO₂.

The reason for limiting the fluoride concentration to more than 15 weight % is that a joining composition having the rare earth element fluoride less than 15 weight % has a high electric resistance and does not permit the electric current to flow. Even when the electric current flows, the generation of Joule heat is not uniform. Accordingly, non-melting parts sometimes remain, which result in poor properties.

The A1₂O₃ and/or SiO₂ improve wettability with the ceramics to be joined on melting and result in a superior joint.

A composition of about 100 weight % of the rare earth element fluoride ScF₃ or YF₃ can achieve a superior joint. The reason is that when Si₃N₄ ceramics are joined by this joining composition, the composition catches SiO₂ produced by an oxidizing reaction of the mother material and the components of the sintering aids for the mother material and accordingly improves the wettability.

The joint achieved by the joining composition according to the present invention has improved joint strength, especially strength at a high temperature, and improved corrosion resistance, for the following reason: When a comparison is made between the III A group elements (such as Y and Sc) obtained from the rare earth element fluorides ScF₃ or YF₃, and the elements Ca or Na obtained from CaF₂ or NaF, Sc³⁺ ion, Y³⁺ ion, Ca²⁺ ion or Na⁺ ion destroys the Si-O network structure in the joint layer and enters the network structure as a glass modifying ion. The glass having Sc³⁺ or Y³⁺ ion incorporated therein is superior in the various properties to the glass having Ca²⁺ or Na⁺ ion incorporated therein.

The higher joint strength comes from the higher packing density of the glass at the joint layer, which makes the strain ratio of glass smaller to improve the Young's modulus. Further, the higher strength at high temperature results from the reason that Sc³⁺ or Y³⁺ ion has a stronger bonding force with oxygen and improves the softening temperature, that is, the viscosity at a high temperature.

Next, the description is directed to a reason why the joining composition according to the present invention improves the corrosion resistance against acid and alkali. Corrosion by acid soluntion is carried out by exchanging between H⁺ ion or H₃O⁺ ion in the corrosive solution and the modifying ions in the network of glass. Sc³⁺ ion or Y³⁺ ion has a stronger bonding force with oxygen than Ca²⁺ ion or Na⁺ ion, making the former difficult to be exchanged with H⁺ ion or H₃O⁺ ion. This results in an improvement in corrosion resistance. Corrosion with alkali solution is carried out by destroying the bonding Si-O in the network in glass with OH⁻ ion in the corrosion solution. Glass having Sc³⁺ ion or Y³⁺ ion incorporated therein has an increased packing density which restrains the diffusion of OH⁻ ion and improves the corrosion resistance.

A joining composition according to the present invention may include, as an electric conductive component, an oxide, in particular an alkaline earth metal oxide such as CaO and MgO. Other components of the composition can include Al₂O_{3,} SiO₂, Y₂O₃, and/or Si₃N₄.

A CaO-based composition preferably includes 15 to 50 weight % of CaO. The mixing ratio range and the function of the residual Al₂O_{3,} SiO₂, Y₂O_{3,} Si₃N₄ are as follows.

The use of aluminium oxide results in the following function: Al incorporated with Ca in the joint layer suppresses the action of Ca at a high temperature because of 4 coordination of Al and thus increases the viscosity (softening temperature) of the joint layer to elevate the joining strength at a high temperature.
The concentration range of Al₂O₃ is preferably more than 10 weight %. A content less than 10 weight % cannot achieve the above function and decreases the joining strength at a high temperature.

The addition of silica is to promote the wettability to the ceramics and elevates the joining strength at room temperature and at a high temperature when compared with a composition having only Al₂O₃ incorporated. The addition of SiO₂ can also compensate for a lower CaO concentration.

Y₂O₃, if incorporated, enters the network structure of silicate (silicate glass) at the joint layer and increases the elastic coefficient at the joint layer. As a result, a joining composition with Y₂O₃ incorporated increases the joining strength. A higher amount of Y₂O₃ does not always result in a higher strength of the joint layer, however. An excess of Y element enters the joint layer (silicate glass) and destroys the network structure of silicate to decrease the softening temperature, which results in a decrease in the joining strength at a high temperature. The additive Y element acts with the other components of the joining composition to determine the joining strength but an increase in the joint part strength can be achieved by an addition of Y₂O₃ of 10 to 55 weight %.

The addition of Si₃N₄ makes the joint layer to be oxynitride and changes the thermal expansion coefficient near to that of the mother material and elevates the elastic coefficient. Further, the softening temperature is also elevated and accordingly the strength of the joint layer is elevated at room temperature and at a high temperature. As a result, a joining composition with the additive Si₃N₄ has increased joining strength over one without the additive. An increase or decrease in the amount of the additive Si₃N₄ is not in a regular relation with the increase or decrease in the joining strength. An excess of Si₃N₄ makes the electric current flow poorly and results in a poor joint layer, because it is thought that Si₃N₄ is very stable. From experiments, the content of Si₃N₄ appears to need to be from 15 to 45 weight % to obtain the desired effect.

A MgO-based composition preferably includes 10 to 45 weight % of MgO. The mixing ratio range and the function of the residual Al₂O₃, SiO₂, Y₂O₃, Si₃N₄ are similar to those of the CaO system.

The MgO-based composition can be improved in the strength at a high temperature by adding a transition metal oxide such as NiO, MnO, ZrO₂, ZnO or TiO₂ in a desired ratio.

Examples of the invention will now be described with reference to the accompanying illustrative drawings, in which:
Fig. 1 is a graph showing the time variation in the electric resistance of a joining composition for use in an electric joining method.
Fig. 2 is a block diagram of joining apparatus suitable for use in the electric joining method of the invention.

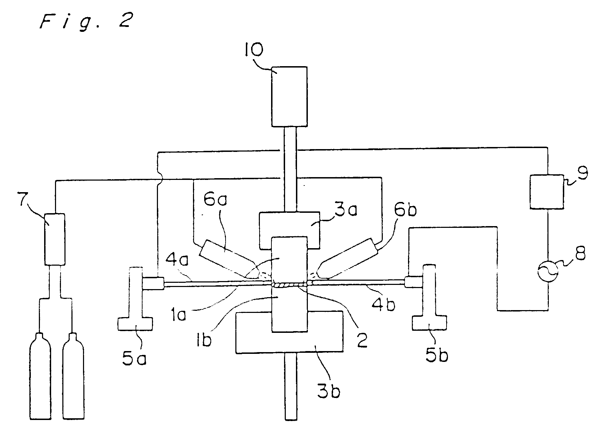

Referring to Fig. 2, there is shown a block diagram of an electric joining apparatus for use in an embodiment of the invention. This apparatus comprises an upper sample holding means (3a) and a lower sample holding means (3b), a pressing and positioning control means (10), gas flame openings for the pre-heating (6a and 6b), electrodes (4a and 4b), electrode moving means (5a and 5b), an electric power source for heating (8) and various measuring equipments such as voltmeter, ampere meter or pyrometer (9). The electrodes are made of tungsten and are in a bar or plate form. The electric power source is a high voltage electric power source with a dropping characteristic or a high voltage electric power source of a constant current or a constant voltage type, and may control the flowing current or electric power in a manual or automatic way.

Block-shaped ceramic bodies are used to evaluate joint strengths, and have the dimensions 15 mm x 15 mm x 20 mm (the plane to be jointed is 15 mm x 15 mm). The roughness of the plane to be jointed is adjusted to be less than 2 µm with Rmax. The joining composition used is a mixture of various powders in a given mixing ratio and is of a paste form incorporated with organic binder dissolved in a solvent such as acetone or toluene. The electric joining method may comprise, as a basic process, the following steps: applying the joining composition in a paste form uniformly to a surface of each ceramic body to be jointed, by a screen printing method; combining the ceramic bodies at the surface to be jointed and setting the combined ceramic in a holding jig; pre-heating the portion to be jointed to a given temperature with a propane gas flame; applying electric voltage across the electrodes after the temperature reaches the given value so as to permit electric current to flow through the joining composition; moving bar-shaped electrodes reciprocally along with the planes to be jointed (when the electrodes are in a plate form, they are in contact with the planes to be jointed and the electric current flows through all of the planes to be jointed); heating the joining composition up to a given temperature at a given heating rate whilst controlling the electric current or the electric power; melting the joining composition; carrying out the reaction between the ceramic bodies to be jointed and the joining composition; and then cooling to room temperature, at a given cooling rate, the ceramic bodies which are now jointed to each other via the molten joining composition, to complete the joint. All steps are carried out in air. A test piece for the strength test (bending test) has dimensions of 3 mm x 4 mm x 40 mm (JIS size) and is obtained by cutting the jointed ceramic bodies (15 mm x 15 mm x 40 mm) through the joint part.

### Joining Compositions containing Rare Earth Element Fluorides

### EMBODIMENT 1

The joining composition used is a mixture of 60 weight % of YF₃, 20 weight % of Al₂O₃ and 20 weight % of SiO₂ and is of a paste form incorporated with organic binder dissolved in a solvent such as acetone or toluene. A test piece for the strength test is prepared from a jointed silicon nitride ceramic body obtained by joining a couple of silicon nitride ceramic square bars in a size of 15 mm x 15 mm x 20 mm with the joining composition in an amount of 50 mg/cm². The silicon nitride ceramic bodies with the joining composition are heated by an electric current of 0.6 to 1.0 A for 5 to 10 min whilst moving the electrode at a rate of 5 cm/min.

A ceramic square bar sample in a size of 3 mm x 4 mm x 40 mm is obtained by cutting the jointed ceramic bodies. The strength test is carried out with the test piece at the following condition by using a three points bending test: The lower span is 30 mm, and the cross-head speed is 0.5 mm/min. The testing result is shown by the average value MPa (mega pascal) obtained with three testing pieces. The resultant strength is 420 MPa at room temperature and is kept nearly to 420 MPa at 1050°C as shown in Table 1.

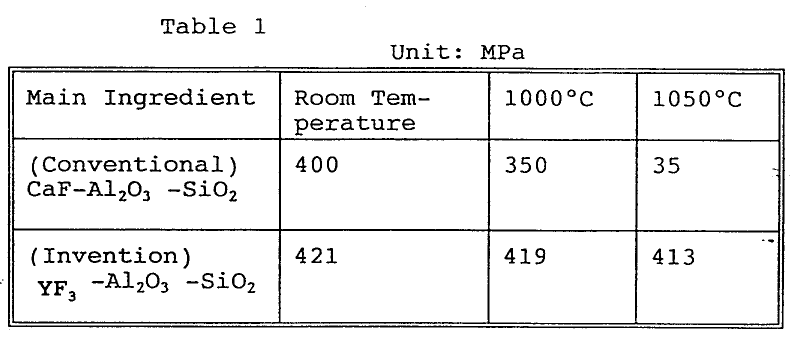

### Embodiment 2

The joining composition used here is a mixture of 50 weight % ScF₃, 25 weight % of A1₂O₃ and 25 weight % of SiO₂ and the resultant joint part is subjected to the strength test in a similar way to that of Embodiment 1. As shown in Table 2, the result shows a strength of 416 Mpa which is kept up to 1050°C.

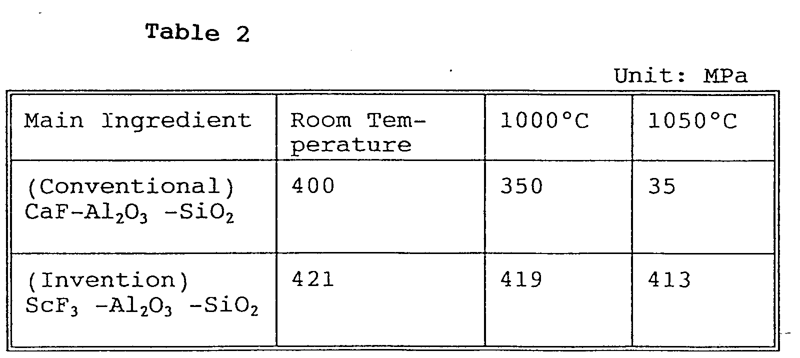

The joining composition of the above embodiment was applied to silicon nitride ceramics having a high heat resistance. However, the joining compositions according to the present invention are also applicable to oxide ceramics such as Al₂O₃ or ZrO₂ and non-oxide ceramics such as sialon ceramic.

Further, joining compositions according to the present invention can be prepared by using a compound of alumina and silica such as kaolinite (Al₂O₃. 2 SiO₂. 2 H₂O) or mullite (3 Al₂O₃. 2 SiO₂) in place of a mixture of individual alumina and silica.

In order to give the joining compositions of the present invention another effect or an improved effect, it is possible to include various additives besides rare earth metal fluoride, Al₂O₃ and SiO₂. For example, the compositions can include a nitride such as Si₃N₄ or AlN and/or a carbide such as SiC or TiC incorporated therein in order to include N or C in the glass of the joint layer. Various properties of the joint layer are improved by the formation of oxynitride glass or oxycarbide glass.

In such a way, the joining compositions of the present invention may include, as a main ingredient, a fluoride of a Group IIIA element and Al₂O₃ and/or SiO₂ and achieve a joint having a stable strength practically usable at room temperature and high temperatures and being superior in corrosion resistance to acid and alkali solutions.

The joining compositions shown in these examples include, as an electric conductive component, one kind of material. However, it is possible to use two or more kinds of electric conductive materials.

In the above embodiments, the electric joining process with the joining compositions according to the present invention is carried out in air, but it could also be carried out in an inert gas such as Ar gas or in N₂ gas.

The effect of the joining compositions according to the present invention is confirmed by a basic electric joining method. The joining agents according to the present invention are applicable for the improved joining methods which are described in JP-A-4-242636 and are aimed at the joining of relatively large or long ceramic bodies.

## Claims

1. A joining method of joining ceramic bodies comprising:
providing a joining composition comprising:
(a) an electric conductive component effective for providing an electric conductivity to said composition at an electric current supplying time; and
(b) a joining component for providing an effective wettability to the ceramic bodies at the molten state of the joining agent and an effective joining strength in the solidified state;
pre-heating the composition;
causing an electric current to flow in the composition to melt the composition; and
cooling the composition to form a joint between the ceramic bodies;
characterised in that said electric conductive component is an ion conductor which comprises YF₃ or ScF₃, and, optionally, a chloride or an oxide and is selected so as to form carrier ions during pre-heating which provides said joining agent with an electric conductivity higher than that of the ceramic bodies at the electric current supplying time, said electric conductive component and said joining component being selected in effective amounts such that the electric resistance of said joining composition increases gradually at said molten state by decreasing the density or the mobility of said carrier ions.

2. A joining method according to claim 1, wherein the joining composition comprises, as main components, more than 15 weight % of at least one compound selected from the group consisting of ScF₃ and YF₃ and the residual of at least one compound selected from the group consisting of Al₂O₃ and SiO₂.

3. A joining composition for use in joining ceramic bodies by an electric joining method comprising:
a composition of:
(a) an electric conductive component effective for providing an electric conductivity to said composition at an electric current supplying time; and
(b) a joining component for providing an effective wettability to the ceramic bodies at the molten state of the joining agent and an effective joining strength in the solidified state;
characterised in that said electric conductive component is an ion conductor which comprises YF₃ or ScF₃, and, optionally, a chloride or an oxide and is selected so as to form carrier ions during pre-heating which provides said joining composition with an electric conductivity higher than that of the ceramic bodies at the electric current supplying time, said electric conductive component and said joining component being selected in effective amounts such that the electric resistance of said joining composition increases gradually at said molten state by decreasing the density or the mobility of said carrier ions.

4. A joining composition according to claim 3, which comprises, as main components, more than 15 weight % of at least one compound selected from the group consisting of ScF₃ and YF₃ and the residual of at least one compound selected from the group consisting of Al₂O₃ and SiO₂.

## Patentansprüche

1. Verbindungsverfahren zum Verbinden von Keramikkörpern, umfassend;
- Bereitstellen einer Verbindungszusammensetzung, umfassend:
(a) eine elektrisch leitende Komponente, wirksam zum Bereitstellen einer elektrischen Leitfähigkeit für die Zusammensetzung, wenn ein elektrischer Strom angelegt oder zugeführt wird; und
(b) eine Verbindungskomponente zum Bereitstellen einer wirksamen Benetzbarkeit der Keramikkörper im geschmolzenen Zustand des Verbindungs- bzw. Bindemittels, sowie einer wirksamen Verbindungsstärke in dem verfestigten Zustand;
- Vorerwärmen der Zusammensetzung;
- Veranlassen eines elektrischen Stromflusses in der Zusammensetzung zum Schmelzen der Zusammensetzung; und
- Kühlen der Zusammensetzung zum Bilden einer Verbindung zwischen den Keramikkörpern;
dadurch gekennzeichnet, daß die elektrisch leitende Komponente ein Ionenleiter ist, welcher umfaßt YF₃ oder ScF₃ und optional ein Chlorid oder ein Oxid und ausgewählt ist, um Trägerionen während der Vorerwärmung, welche das Verbindungs- bzw. Bindemittel mit einer elektrischen Leitfähigkeit bereitstellt, die höher ist als jene der Keramikkörper, wenn der elektrische Strom zugeführt wird, wobei die elektrisch leitende Komponente und die Verbindungskomponente in wirksamen Mengen derart ausgewählt sind, daß der elektrische Widerstand der Verbindungszusammensetzung graduell im geschmolzenen Zustand zunimmt durch Absenkung der Dichte oder der Beweglichkeit der Trägerionen.

2. Verbindungsverfahren nach Anspruch 1, bei welchem die Verbindungszusammensetzung umfaßt, als Hauptkomponente, mehr als 15 Gew.% von zumindest einer Verbindung, ausgewählt aus der Gruppe, bestehend aus ScF₃ und YF₃, wobei der Rest zumindest eine Verbindung umfaßt, ausgewählt aus der Gruppe, bestehend aus Al₂, O₃ und SiO₂.

3. Verbindungszusammensetzung zur Verwendung beim Verbinden bzw. Verkleben von Keramikkörpern durch ein elektrisches Verbindungsverfahren, umfassend:
eine Zusammensetzung aus:
(a) einer elektrisch leitenden Komponente, wirksam, um der Zusammensetzung eine elektrische Leitfähigkeit zu verleihen, wenn elektrischer Strom zugeführt wird; und
(b) eine Verbindungskomponente zum Bereitstellen einer wirksamen Benetzbarkeit der Keramikkörper, im geschmolzenen Zustand des Verbindungs- bzw. Bindemittels, und einer wirksamen Verbindungsstärke bzw. -Festigkeit in dem verfestigten Zustand;
dadurch gekennzeichnet, daß die elektrisch leitende Komponente ein Ionenleiter ist, umfassend YF₃ oder ScF₃ und optional ein Chlorid oder ein Oxid und ausgewählt ist zum Bilden von Trägerionen während einer Vorerwärmung, der Verbindungszusammensetzung eine elektrische Leitfähigkeit verleihend, die höher ist als jene der Keramikkörper, wenn elektrischer Strom zugeführt wird, wobei die elektrisch leitende Komponente und die Verbindungskomponente in wirksamen Mengen derart ausgewählt sind, daß der elektrische Widerstand der Verbindungszusammensetzung graduell im geschmolzenen Zustand zunimmt durch Absenkung der Dichte oder der Beweglichkeit bzw. Mobilität der Tragerionen.

4. Verbindungszusammensetzung nach Anspruch 3, welche umfaßt, als Hauptkomponente, mehr als 15 Gew.% von zumindest einer Verbindung, ausgewählt aus der Gruppe, bestehend aus ScF₃ und YF₃, wobei der Rest zumindest eine Verbindung umfaßt, ausgewählt aus der Gruppe, bestehend aus Al₂, O₃ und SiO₂.

## Revendications

1. Procédé d'assemblage pour assembler des corps céramiques comprenant :
l'application d'une composition d'assemblage comprenant :
(a) un constituant conducteur électrique efficace pour procurer une conductivité électrique à ladite composition au moment de l'alimentation en courant électrique; et
(b) un constituant d'assemblage pour procurer une mouillabilité efficace aux corps céramiques, à l'état fondu de l'agent d'assemblage, et une résistance d'assemblage efficace à l'état solidifié,
le préchauffage de la composition;
le passage d'un courant électrique dans la composition afin de faire fondre la composition; et
le refroidissement de la composition afin de former un joint entre les corps céramiques ;
caractérisé en ce que ledit constituant conducteur électrique est un conducteur ionique, que comprend YF₃ ou ScF₃, et éventuellement un chlorure ou un oxyde et qui est choisi de façon à former des ions support au cours du préchauffage ce qui procure audit agent d'assemblage une conductivité électrique supérieure à celle des corps céramiques au moment de l'alimentation en courant électrique, ledit constituant conducteur électrique et ledit constituant d'assemblage étant choisis en des quantités efficaces de telle sorte que la résistance électrique de ladite composition d'assemblage augmente d'une manière graduelle audit état fondu par diminution de la densité ou de la mobilité desdits ions supports.

2. Procédé d'assemblage selon la revendication 1, dans lequel la composition d'assemblage comprend en tant que constituants principaux, plus de 15% en poids d'au moins un composé choisi dans le groupe constitué par ScF₃ et YF₃ et le complément étant an moins un compose choisi dans le groupe constitué par Al₂O₃ et SiO₂.

3. Composition d'assemblage pour une utilisation dans l'assemblage de corps céramiques par un procédé d'assemblage électrique comprenant :
une composition constituée :
(a) d'un constituant conducteur électrique efficace pour procurer une conductivité électrique à ladite composition au moment de l'alimentation en courant électrique ; et
(b) d'un constituant d'assemblage pour procurer une mouillabilité efficace aux corps céramiques, à l'état fondu de l'agent d'assemblage, et une résistance d'assemblage efficace à l'état solidifié ;
caractérisée en ce que ledit constituant conducteur électrique est un conducteur ionique, qui comprend YF₃ ou ScF₃ et éventuellement un chlorure ou un oxyde et qui est choisi de façon à former des ions support au cours du préchauffage qui procure à ladite composition d'assemblage une conductivité électrique supérieure à celle des corps céramiques au moment de l'alimentation en courant électrique, ledit constituant conducteur électrique et ledit constituant d'assemblage étant choisis en des quantités efficaces de telle sorte que la résistance électrique de ladite composition d' assemblage augmente d'une manière graduelle audit état fondu par diminution de la densité ou de la mobilité desdits ions supports.

4. Composition d'assemblage selon la revendication 3, qui comprend, en tant que constituants principaux, plus de 15% en poids d'au moins un composé choisi dans le groupe constitué par ScF₃ et YF₃ et le complément étant au moins un composé choisi dans le groupe constitué par Al₂O₃ et SiO₂.
